# EUROPEAN PATENT APPLICATION

(11) **EP 3 505 419 A1**
(43) Date of publication of application: **03.07.2019**
(21) Application number: 18215343.7
(22) Date of filing: 21.12.2018
(51) Int. Cl.: B62B 3/06, B60D 1/48

(54) **MOBILE PLATFORM FOR TRANSPORT SYSTEMS**

(30) Priority: 22.12.2017 PT 2017110465
(71) Applicant: Imeguisa Portugal - Indústrias Metálicas Reunidas, SA, 2950-727 Quinta Do Anjo (PT)
(72) Inventor: Brito Filipe, Orlando José, P-2950-109 Palmela (PT)
(74) Representative: Lourenço Martinho do Rosário, Ana Margarida

(57) **Abstract**

This invention refers to mobile platforms for transporting and packing goods, especially for use in Logistics Train Systems for transporting and distributing goods inside factories or warehouses, within the scope of Internal Logistics or Intralogistics, namely in the supply of production lines, retrieval of the finished product from production, sorting, packing, and dispatch. The platform (3) being composed by: skids (3.1), a support for the hitch plate (3.6), a hitch plate (3.2), a hitch hole (3.3), and a top rim (3.4) mounted on wheels of the platform (3.5).

## Description

### Scope of Invention

This invention refers to mobile platforms for transporting and packing goods, especially for use in Logistics Train Systems for transporting and distributing goods inside factories or warehouses, within the scope of Internal Logistics or Intralogistics, namely in the supply of production lines, retrieval of the finished product from production, sorting, packing and dispatch.

### Background of the Invention

Transportation or distribution equipment are known to man ever since he felt the need to facilitate and expedite the transport of materials.

One of the types of equipment used to transport materials inside factories or warehouses is called "Logistics Train System." A logistics train is usually composed of a Towing Tractor which hauls one or more Trailers engaged with each other. Depending on its structure, each trailer may receive one or more Mobile Platforms onto which materials are placed for transport.

Some documents belonging to the state of the art were found that refer to solutions and equipment used in "Logistics Train Systems".

For instance the British patent GB2409850, which discloses a "Transport system including a mobile platform" or the document WO2009036750, which also presents a "Transport system, in particular having movable pallets" Document EP1448424 describes a "System for stocking in production lines." Can also be referred the European patent EP2439124, which presents a "Mobile Platforms Transport System".

All the above documents relate to equipment that has the same purpose - transporting mobile platforms - having different solutions to achieve this objective.

### Advantages of the Invention

One of the main advantages of the equipment of the invention is a slight inclination of the platform skids which, assisted by the angle of the roller tracks of the trailer to the horizontal, minimizes efforts for loading and unloading the platforms and also permits less wearing of material as friction is also reduced.

This feature is allied with the practical locking and blocking system of the platforms on the trailer, which only needs to be activated to unlock the platforms since it is activated automatically without the operator's intervention during loading.

### Brief description of drawings

These and other features can be easily understood from the attached drawings, which should be considered as mere examples and not in any way restrictive of the scope of the invention. In the drawings and for illustrative purposes, the measurements of some elements may be exaggerated and not drawn to scale. Absolute and relative dimensions do not correspond to the real ratios for executing the invention.
Figure 1 shows a "Logistics Train System" constituted by tractor (1), trailers (2), and platforms (3).
Figure 2 is a diagram demonstrating the receiving and packing method of the platforms (3) in a trailer (2) with a C-shaped structure.
Figure 3 presents a diagram of the receiving and packing method of the platforms (3) in a trailer (2) with an E-shaped structure.
Figure 4 is a diagram exhibiting the receiving and packing method of the platforms (3) in a trailer (2) with an I-shaped structure.
Figure 5 shows a top perspective view of a trailer (2) in which the following components are visible: front chassis (2.1), rear chassis (2.2), central beam (2.3) connecting chassis, roller tracks (2.4), platform locking system (2.5), hitch pin (2.6), and pedals (2.7), mounted on wheels of the trailer (2.8).

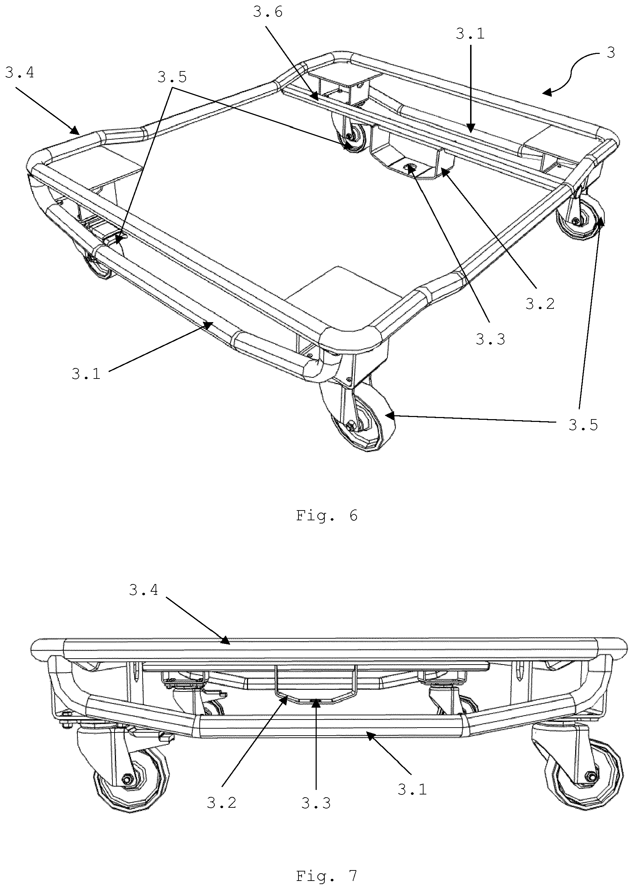

In figures 6 and 7 is possible to see a top perspective view and a lateral view of the platform (3) with the following various elements that make up its composition: skids (3.1), support for the hitch plate (3.6), hitch plate (3.2), hitch hole (3.3), and top rim (3.4), mounted on wheels of the platform (3.5).
Figure 8 shows a lateral view of the skid (3.1) of the platform (3).
Figure 9 exhibits a lateral view of the support for the hitch plate (3.6) of the platform (3), which includes the hitch plate (3.2) and the hitch hole (3.3).
Figures 10a and 10b present an overall view of the placement of the platform (3) onto the trailer (2), where the platform (3) is raised so that the wheels of the platform (3.5) to not touch the ground.
Figures 11a, 11b, and 11c present a sequence of the positions for hitching the platform (3) onto the trailer (2).

### Detailed description of the Invention

By "substantially vertical", "substantially horizontal", "substantially circular", "substantially rectangular", "substantially linear", "substantially circular", "substantially parallel", "substantially central", "oblique", "adjacent", "lower" shall be understood as preferred positions and forms for executing the invention, as is can work with other positions and other formats.

The terms "central", "adjacent", "parallel", "oblique", "lower" in the description are used for descriptive purposes and not necessarily for describing relative positions. It is important to note that the terms are used interchangeably in appropriate circumstances and that the ways to execute the invention described herein are capable of operating in orientation other than the ones described or illustrated herein.

The terms "substantially horizontal", "substantially central", "substantially parallel", "oblique", "lower" are the positions perceived by an observer adjacent to the equipment, which, in turn, is placed on a horizontal surface. "Logistics Train System" refers to a transport system consisting of a tractor and at least one trailer to transport mobile platforms for transporting and packing goods. It is used to transport and distribute goods inside factories or warehouses, including but not limited to supplying production lines, retrieving the finished product from production, sorting, packing, and dispatch.

This invention refers to mobile platforms for transporting and packing goods which are intended to be placed on trailers integrating the "Logistics Train System."

### Framework of the Invention

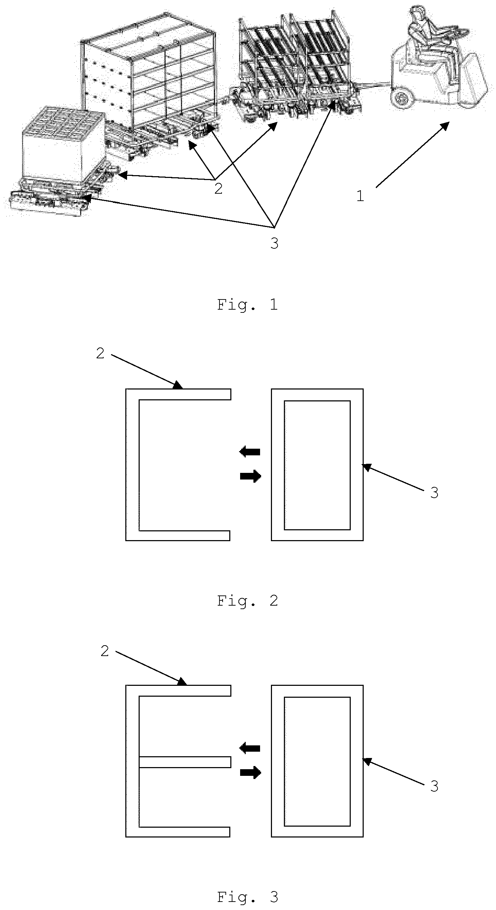

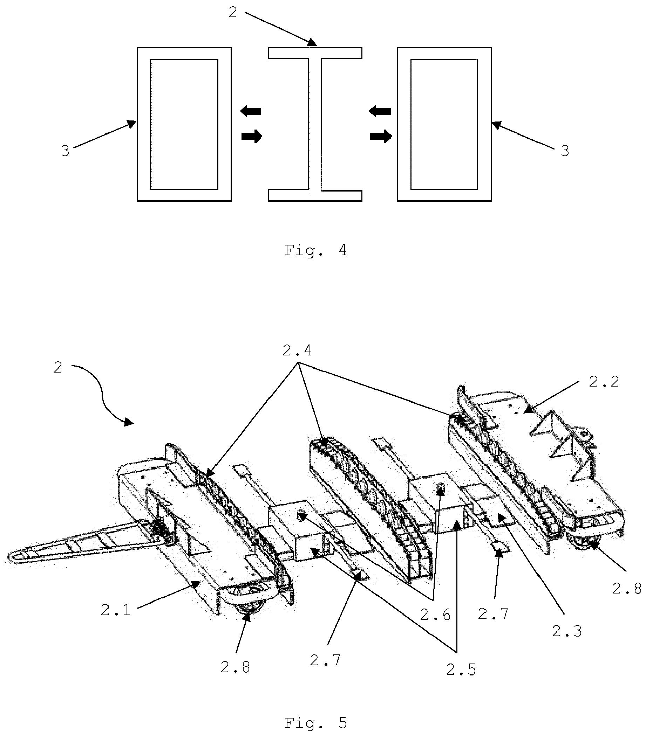

The "Logistics Train Systems" differ from each other by the composition of the structures of the trailers, which can be C-shaped as shown in figure 2, E-shaped according to figure 3, or I-shaped like in Figure 4, as well as by the different receiving and packing methods of the platforms on the structures of the trailers. This results in different operating modes, namely the possibility of placing platforms on both sides of the trailer, as opposed to placing them only on one side.

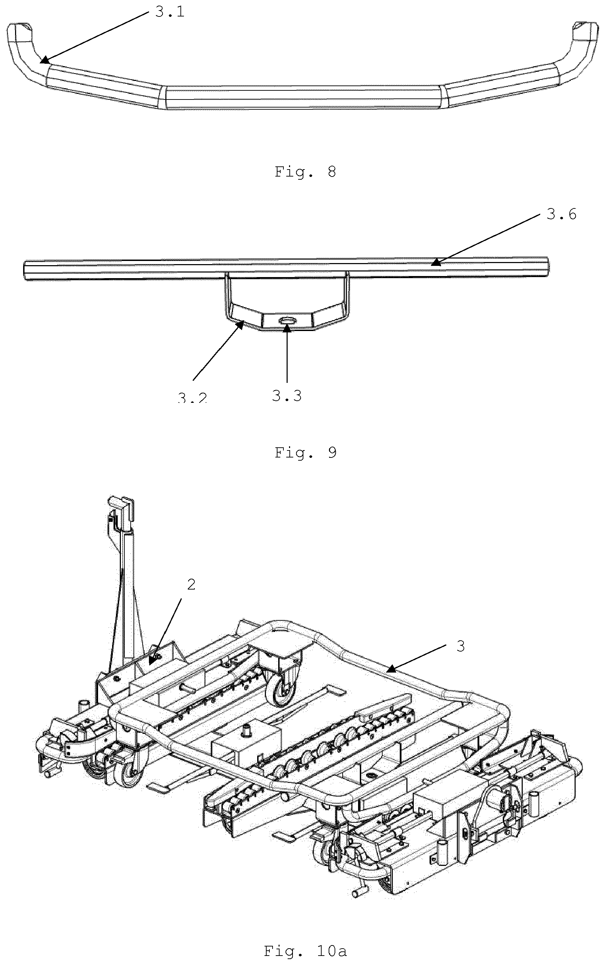

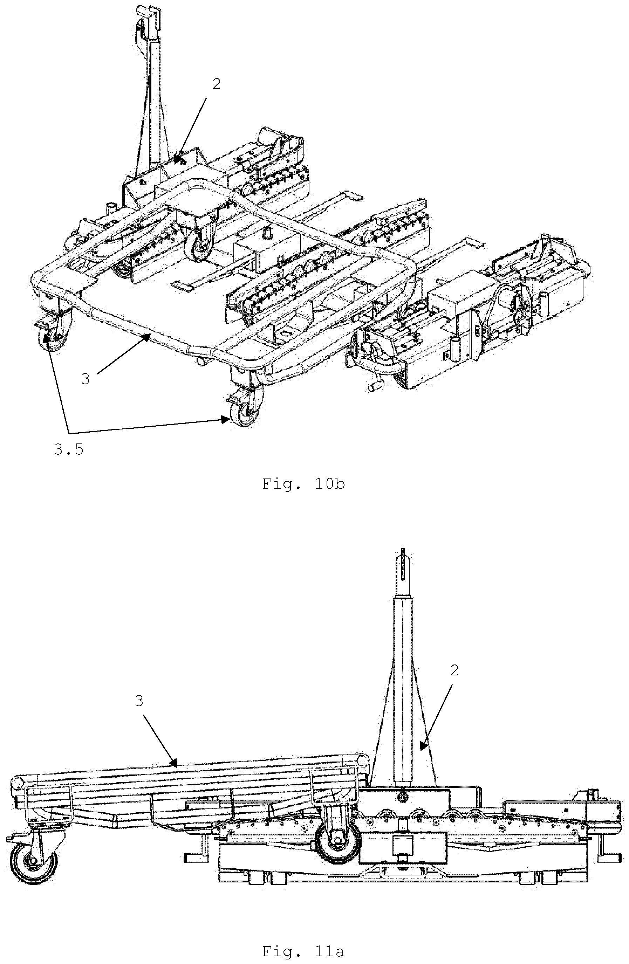

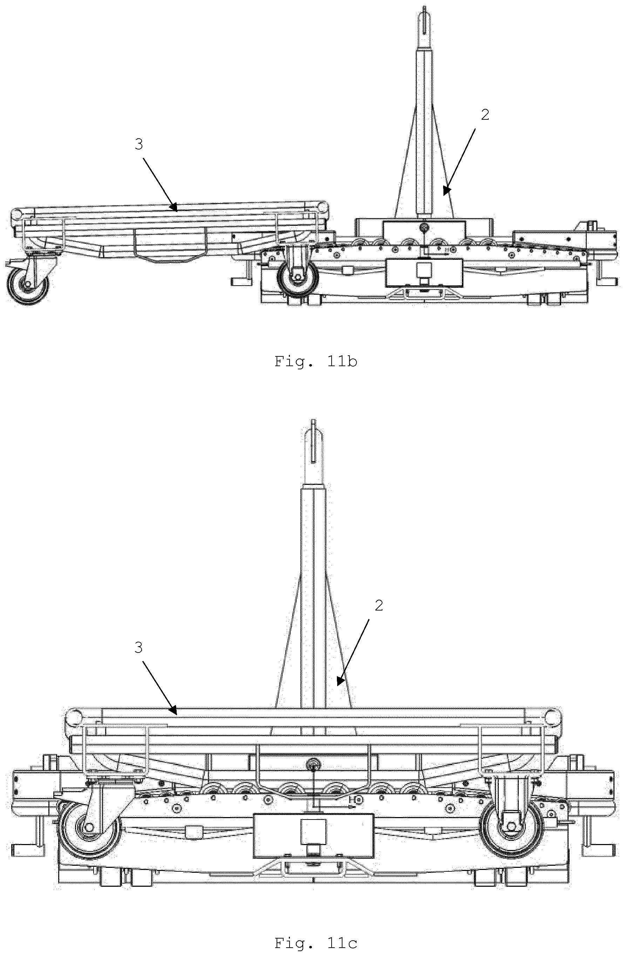

The placement/positioning of platforms onto trailers is usually done manually, in which an operator pushes or pulls the platform into or on top of the trailer. The way this process is conducted is a distinguishing factor of the different systems. There are two fundamental methods:
1) Method in which the platform is inserted into the structure of the trailer by keeping the wheels set on the ground;
2) Method in which the platform is positioned on the structure of the trailer, as shown in Figures 10a, 10b, 11a, 11b, and 11c, with the platform raised so that the wheels are not set on the ground, thereby preserving them from wear. There are several ways to raise the platform, namely but not exclusively, through rollers, or electric or pneumatic elevators, which require the trailer to have a hitching and locking mechanism that allows the platform to remain fixed to its structure during the course of transport.

### The Trailer

In one embodiment, the trailer (2) designed ideally to receive round-tube platforms is formed by a front chassis (2.1) and a rear chassis (2.2), which are solidly connected by a central beam (2.3), roller tracks (2.4) to facilitate the placement/removal of platforms (3), and a platform locking system (2.5) that includes a hitch pin (2.6) that fits into the hitch hole (3.3) of the hitch plate (3.2) of the platform (3).

The platform locking system (2.5) is activated automatically by the platform (3) when it is loaded by means of the hitch pin (2.6) into the hitch hole (3.3) of the hitch plate (3.2). It is thereby blocked and prevents release during transport. To release the platform (3), simply press down on any of the pedals (2.7) in the platform locking system (2.5).

### The Platform

The platform (3) designed, namely but not exclusively, in a substantially cylindrical tubular profile, that comprises:
- a top rim (3.4) with a substantially rectangular shape substantially parallel to the surface where the platform (3) sits;
- wheels of the platform (3.5) preferably placed under the top rim (3.4) and preferably in their axles, secured to the top rim (3.4) by means of a plate on which a freewheel rotation system is placed;
- skids (3.1) integral with the top rim (3.4) and placed under two of the opposite edges of the top rim (3.4), comprising:
   - a central section of a substantially horizontal linear shape,
   - a second section with the right end adjacent to the left end of the central section, with a substantially linear shape, in an oblique position, making an angle between 6° and 18° to the horizontal,
   - a third section with the left end adjacent to the right end of the central section, with a substantially linear shape, in an oblique position, making an angle between 6° and 18° with the horizontal,
   - a fourth section with the right end adjacent to the left end of the second section, with a substantially circular shape, whose left end is adjacent to the lower part of the top rim (3.4),
   - a fifth section with the left end adjacent to the right end of the third section, with a substantially circular shape, whose right end is adjacent to the lower part of the top rim (3.4);
- a support for the hitch plate (3.6) designed, namely but not exclusively, in a substantially cylindrical tubular profile, where the lower part incorporates the hitch plate (3.2) in a substantially central position;
- hitch plate (3.2) comprising:
   - a central plate of substantially horizontal linear shape with a substantially circular hitch hole (3.3) in a substantially central position,
   - a second plate with the right end adjacent to the left end of the central section, with a substantially linear shape, in an oblique position, making an angle between 5° and 45° with the horizontal, more concretely between 15° and 25°, more specifically between 19,5° and 20,5°,
   - a third plate with the left end adjacent to the right end of the central section, with a substantially linear shape, in an oblique position, making an angle between 5° and 45° to the horizontal, more concretely between 15° and 25°, more specifically between 19,5° and 20,5°
   - a fourth plate with the right end adjacent to the left end of the second plate, with a substantially linear and substantially vertical shape, whose left end is adjacent to the lower part of the support for the hitch plate (3.6),
   - a fifth plate with the left end adjacent to the right end of the third plate, with a substantially vertical shape, whose left end is adjacent to the lower part of the support for the hitch plate (3.6).

### Placing, positioning, and hitching the platform onto the trailer

Placement, positioning, and hitching are carried out by pushing/pulling the platform (3) onto the trailer (2). The skids (3.1) that are substantially aligned with the roller tracks (2.4) allow that the oblique section of the skid (3.1) to come into contact with the roller tracks (2.4) when the platform (3) is moved, which, due to the fact that it is also inclined and has rollers, assists the placement of platforms (3) onto the trailer (2).

The support for the hitch plate (3.6) is also substantially aligned with the platform locking system (2.5), which also allows the hitch hole (3.3) to be substantially aligned with the hitch pin (2.6). When the platform (3) is moved, the oblique section of the hitch plate (3.2) pushes the hitch pin (2.6), which is in the extended position, to the retracted position. When the hitch pin (2.6) enters the hitch hole (3.3), the hitch pin (2.6) goes from the retracted position to the extended position, blocking the displacement of the platform (3) on the trailer (2).

To remove the platform (3) from the trailer (2), simply press down on any of the pedals (2.7), which causes the hitch pin (2.6) to move from the extended position to the retracted position, thereby releasing it from the hitch hole (3.3), which, in turn, releases the platform (3) from the trailer (2) and can be pushed/pulled out of the trailer (2).

## Claims

1. Mobile platform for transport systems comprising a top rim (3.4) mounted on wheels of the platform (3.5) **characterized in that** comprises:
- skids (3.1) placed under the top rim (3.4) whose ends are integral with two of the opposite edges of the top rim (3.4);
- a support for the hitch plate (3.6) where the lower part incorporates a hitch plate (3.2) in a substantially central position;
- the hitch plate (3.2) that incorporates a hitch hole (3.3) in a substantially central position.

2. Mobile platform according to claim 1 wherein the skids (3.1) incorporates:
- a central section of a substantially horizontal linear shape,
- a second section with the right end adjacent to the left end of the central section, with a substantially linear shape, in an oblique position, making an angle between 6° and 18° to the horizontal,
- a third section with the left end adjacent to the right end of the central section, with a substantially linear shape, in an oblique position, making an angle between 6° and 18° to the horizontal,
- a fourth section with the right end adjacent to the left end of the second section, with a substantially circular shape, whose left end is adjacent to the lower part of the top rim (3.4),
- a fifth section with the left end adjacent to the right end of the third section, with a substantially circular shape, whose right end is adjacent to the lower part of the top rim (3.4).

3. Mobile platform according to claim 1 wherein the hitch plate (3.2) incorporates:
- a central plate in a substantially horizontal linear shape with the hitch hole (3.3) in a substantially central position,
- a second plate with the right end adjacent to the left end of the central section, with a substantially linear shape, in an oblique position, making an angle between 5° and 45° to the horizontal, more solidly between 15° and 25°, more specifically between 19,5° and 20,5°,
- a third plate with the left end adjacent to the right end of the central section, with a substantially linear shape, in an oblique position, making an angle between 5° and 45° to the horizontal, more solidly between 15° and 25°, more specifically between 19,5° and 20,5°,
- a fourth plate with the right end adjacent to the left end of the second plate, with a substantially linear, substantially vertical shape, whose left end is adjacent the lower part of the support for the hitch plate (3.6),
- a fifth plate with the left end adjacent to the right end of the third plate, with a substantially vertical shape, whose left end is adjacent to the lower part of the support for the hitch plate (3.6).

4. Mobile platform according to the preceding claims wherein the platform (3) designed particularly in a substantially cylindrical tubular profile.

5. Mobile platform according to claim 1 and 3 wherein the support for the hitch plate (3.6) designed particularly in a substantially cylindrical tubular profile.

6. Mobile platform according to claims 1 and 3 wherein the hitch hole (3.3) substantially circular shape.
